# EUROPEAN PATENT APPLICATION

(11) **EP 1 297 737 A1**
(43) Date of publication of application: **02.04.2003**
(21) Application number: 02021581.0
(22) Date of filing: 26.09.2002
(51) Int. Cl.: A01G 3/00, A01G 23/06, A01G 3/053, A01D 34/00, A01D 34/86

(54) **Shredder device**

(30) Priority: 27.09.2001 IT BO20010596
(71) Applicant: Ferri S.rl., 44030 Tamara (Ferrara) (IT)
(72) Inventor: Ferri, Sandro, 44100 Ferrara (IT)
(74) Representative: Negrini, Elena

(57) **Abstract**

A shredder device is provided with a cylinder (2) having a plurality of connection means (3), each one having two divergent knives (4).

The cylinder (2) is rotatably supported by at least a rolling mean (27) and each connection mean (3) has a straight knife (5) interposed between the two divergent knives (4).

A "U" shaped member (15) is engaged in holes (12) of the related knives (4, 5) for an articulated joining of these last ones.

The end portions of the cylinder (2) have respectively a first disk (18) and a second disk (19), each peripherally having a plurality of fixing means (20), fit to the removably fixing of balancing masses.

## Description

The present invention relates the agricultural devices, particularly the invention refers to a shredder device fit for agricultural means or for road maintenance and the like to shred, on the field, saplings, branches and bushes.

There are known shredder device consisting in a shaft or drum having a plurality of couples of divergent knives for the shred bushes, saplings and branches; the shaft is rotated by a motor and, generally, is moved by an arm installed on a vehicle.

The main drawback of the known shredder device, consists in that the blades of the coupled knives, being reciprocally distant, shear the stems and the branches in pieces of excessive dimension, making dangerous to walk on the ground, on which said pieces are spread, making too long the necessary time for their biological degradation and making difficult and expensive theirs possible harvest and disposal.

Further drawback of said known devices consists in that the plurality of knives and their conformation unbalance their supporting cylinder causing, during the rotation thereof, strong vibrations which damage prematurely all the members associated to the drum, particularly the support pins, and cause discomfort to the operator because of the direct effect of the vibrations and noise that they produce.

The main object of the present invention is to propose a device shredder fit to shred branches, stems, bushes and similar in small pieces which are not an obstacle and which require short times of biodegradation and which have a reduced volume for an easy collect and disposal.

Further object is to propose a device fit to reduce the vibrations caused by its rotation, which is provided with axial supports or pins extremely reliable and which is easy and convenient to be manufactured and safe to be used.
The above-mentioned objects are achieved according to the content of the claims.

The characteristics of the invention are underlined in the following with particular reference to the attached drawings, in which:

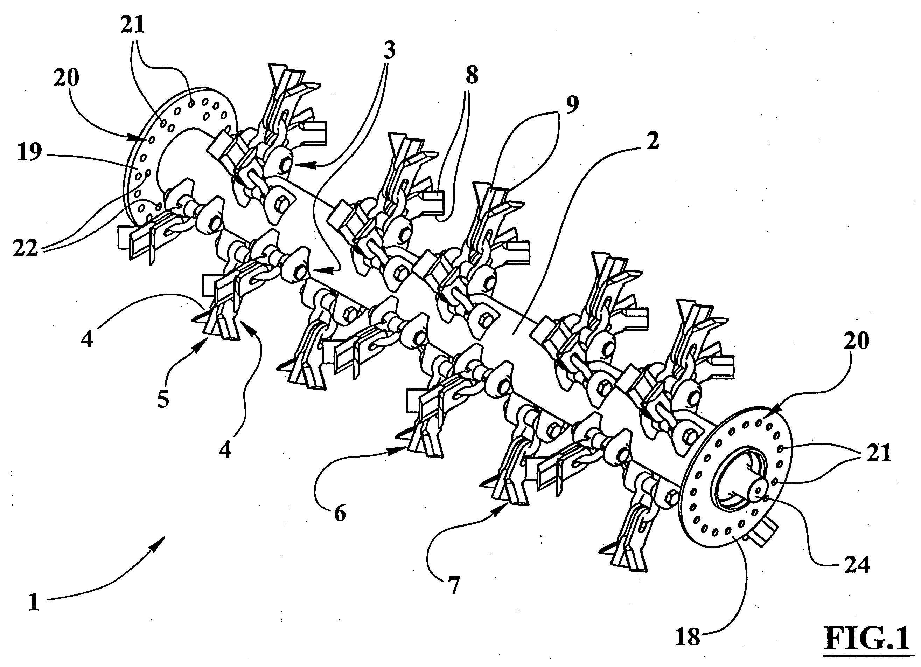

- figure 1 shows an axonometric view of the shredder device object of the present invention;

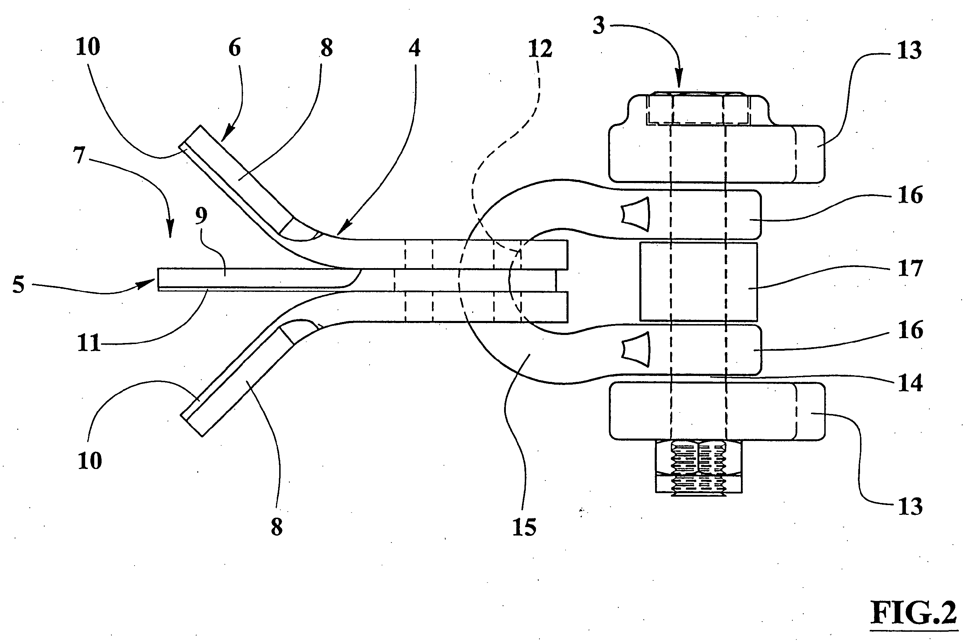

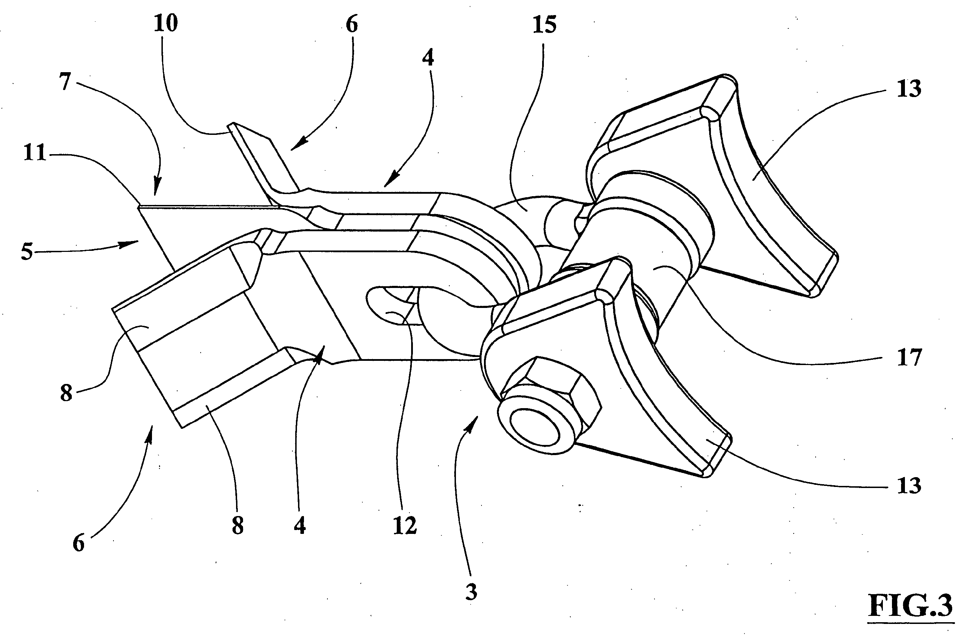

- figures 2 and 3 show respectively an enlarged plan view and an enlarged axonometric view of blades and related connection means of the figure 1 device;

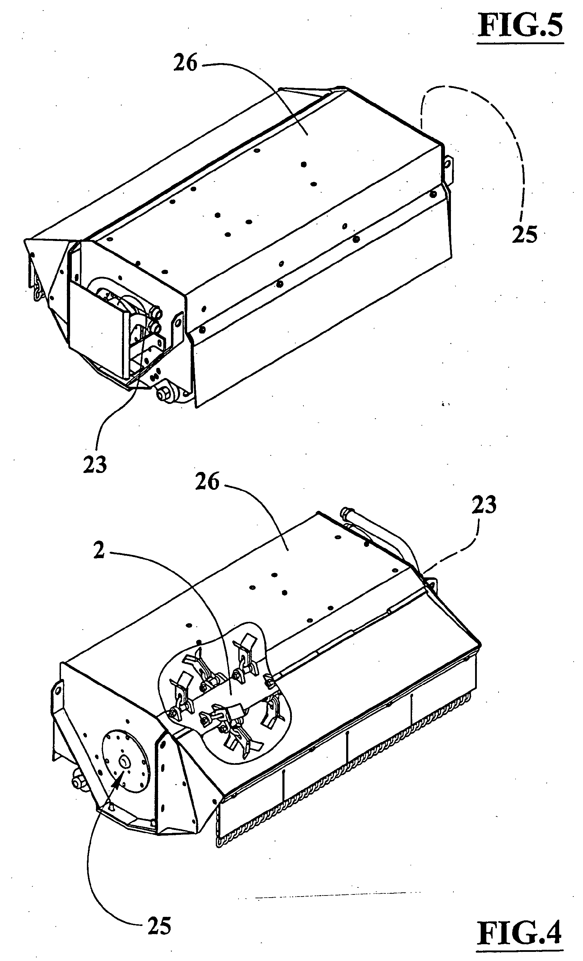

- figure 4 shows an axonometric view of the figure device 1 in association with a protection carter to which some parts have been removed for better underlining others;
- figure 5 shows an axonometric view of the protection carter of figure 4;
- figure 6 shows a partial enlarged section view of an end of the figure 4 device.

With reference to figures from 1 to 5, numeral 1 indicates the device object of the present invention provided with a cylinder 2 having a plurality of connection means 3, whose each one rotatably supports two divergent knives 4, between which a straight knife 5 is interposed.

The divergent 4 and straight 5 knives are made of steel and with rectangular cross section and have, in correspondence of one of their ends, a buttonhole hole 12 for joining the respective connection mean 3 and, in correspondence of the other end, respective blade portions first 6 and second 7.

The first blade portions 6 of the divergent knives 4 of each connection mean 3 carries out with the related and adjacent second blade portion 7, an angle included between 30° and 60°, preferably 45°.

The blade portions first 6 and second 7 have, carried out on opposed sides of a same face, respective cutting planes first 8 and second 9 joined at the opposed face by respective first leading edges 10 and second leading edges 11.

The second cutting planes 9 and second leading edges 11 of the straight knives 5, have respectively a longitudinal extension, namely a length, greater and a thickness smaller with respect to the first cutting planes 8 and the first leading edges 10 of the divergent knives 4.

The first cutting planes 8 are carried out in correspondence of the face of the corresponding first blade 6 opposed to the respective first knife 5.

Each connection mean 3 includes at least two flanges 13 rigidly fixed by welding to the cylinder 2, and rotatably connected to the related knives 4, 5 through a "U" shaped member 15 engaged with the coupling holes 12 of the related knives 4, 5 and whose ends have respective opposed buttonholes 16 rotatably engaged in a pin 14 parallel to the cylinder 2 and fixed to the flanges 13.

The dimensions of the coupling holes 12 are such to allows to the knives 4, 5 independent and articulated motions of moderate translation and rotations with respect to the shaped member 15.

The pin 14 also supports a sleeve 17 interposed between the buttonholes 16 and fit for strengthening the related connection mean 3.

The end portions of the cylinder 2 have respectively a first disk 18 and a second disk 19 each one having peripherally a plurality of fixing means 20, consisting in corresponding fixing holes 21, eventually threaded, and fit for removably fixing balancing masses.

The second disk 19 has a plurality of fixing openings 22 for coupling a motor mean 23, of hydraulic type, fixed to a protection carter 26.

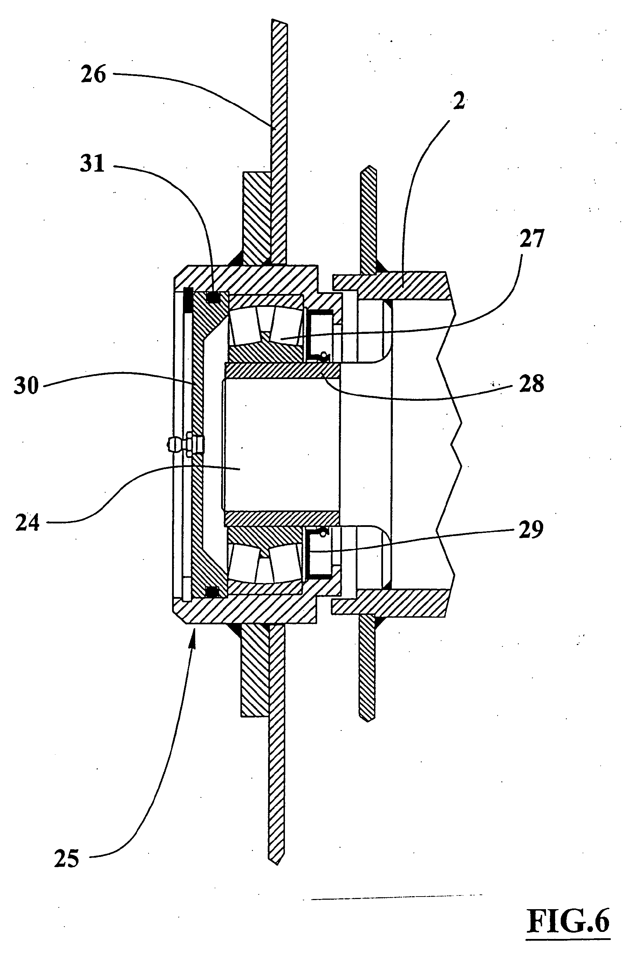

With reference to figure 6, the end of the cylinder 2 corresponding to the first disk 18 has an axial support 24, with cylindrical pivot shape, coupled to a rolling mean 27 through a bush mean 28 made of casehardened steel and removably fixed to the rolling mean 27 and to the axial support 24.

The bush mean 28 has a surface contacting the axial support 24 larger than the inner cylindrical surface of the rolling mean 27, preferably the double.

The rolling mean 27, consisting of a roller bearing, is removably housed in a tubular cylindrical seat 25 bolted to the protection carter 26. The rolling mean 27 is retained in seat by blocking means 30, consisting of a disc shaped element, locked by an elastic ring engaged in a throat groove carried out in correspondence of the free end of the seat 25.

The blocking means 30 are provided with gasket means 31 for the hydraulic seal between the disc shaped element and the seat 25, whose remaining end has revolving seal means 29, consisting of an oil retainer, mating the bush 28. Therefore, the rolling mean is housed in a watertight cavity, which can be filled with lubricant through a lubricator.

The connection means 3 are preferably positioned along a spiral of the axial support 2 for better offsetting the knives.

The operation of the device 1 provides that in an activation condition of the motor mean 23, the rotation of the cylinder 2, up to over 3000 revolutions per minute, causes for centrifugal effect, the radial alignment of the knives 4, 5 which, following the carter 26 movement, impact branches, stems and similar.

The leading edge 11, the length and the thickness of the cutting plane 9, make the second blade portions 7 sharper and more penetrating than the first blade portions 6 and consequently the straight knife 5 stand out during the cutting the two divergent knives 4, in such a way that the branch portion interposed between these last ones is cut in two parts by the straight knife 5.

The protection carter 26 avoids that the fragments and the cut portions can be dangerously threw towards people or things.

It is important to observe that the fixing means 20 allow performing the electronic balancing of the device 1, advantageously guaranteeing the reduction and the suppression of the vibrations and noise in all the operational conditions of the device 1.

The main advantage of the present invention is to provide a shredder device fit to shred branches, stems, bushes and similar in small pieces which are not an obstacle and which require short biodegradation times and have a reduced volume for an easy harvest and disposal.

Other advantage is to provide a device fit to reduce the stresses due to the vibrations.

Further advantage of the present invention is to provide a device, which is easy to be manufactured, cheap, and high reliable.

## Claims

1. Shredder device provided with a cylinder (2) having a plurality of connection means (3) each one having two divergent knives (4); said device (1) being **characterized in that** each connection mean (3) has a straight knife (5) interposed between the two divergent knives (4), and said cylinder (2) is rotatably supported by at least a rolling mean (27).

2. Device according to claim 1 **characterized in that** the knives divergent (4) and straight (5), have respective first blade portions (6) and second blade portions (7), these last ones having a longitudinal extension bigger than the extension of the first blade portions (6).

3. Device according to claim 2 **characterized in that** each first blade portion (6) forms with the adjacent second blade portion (7), an angle included between 30° and 60°, preferably 45°.

4. Device according to claim 2 **characterized in that** the blade portions, first (6) and second (7), have respective cutting planes, first (8) and second (9), and respective first leading edges (10) and second leading edges (11), these last ones having a thickness smaller than the first leading edges (10).

5. Device according to claim 4 **characterized in that** each first blade (6) has, in correspondence of the side thereof opposed to the respective first knife (5), two first opposed cutting planes (8).

6. Device according to claim 4 **characterized in that** each second blade (7) has two second opposed cutting planes (9).

7. Device according to any of the claims from 2 to 6 **characterized in that** the end of each knife first (4) and second (5), opposed to the related blade (6, 7), has a coupling hole (12) to the respective connection mean (3).

8. Device according to claim 7 **characterized in that** each connection mean (3) includes at least two flanges (13), rigidly fixed to the cylinder (2) and supporting at least a pin (14) parallel to the cylinder (2) and connected to the related knives (4, 5).

9. Device according to claim 8 **characterized in that** the pin (14) supports a couple of facing buttonholes (16) of a "U" shaped member (15) engaged in the holes (12) of the related knives (4, 5) for an articulated joining of these last ones.

10. Device according to claim 9 **characterized in that** the pin (14) supports a sleeve (17) interposed between the buttonholes (16).

11. Device according to any of the preceding claims **characterized in that** the end portions of the cylinder (2) have respectively a first disk (18) and a second disk (19), at least one of which has peripherally a plurality of fixing means (20) fit for removably fixing balancing masses.

12. Device according to claim 11 **characterized in that** the fixing means (20) consist in a plurality of fixing holes (21).

13. Device according to claim 11 **characterized in that** at least the second disk (19), has a plurality of fixing openings (22) for a motor mean (23).

14. Device according to claim 1 **characterized in that** at least an end of the cylinder (2), has an axial support (24) supported by the rolling mean (27) accommodated in a seat (25) fixed to a protection carter (26) of the device (1).

15. Device according to claim 14 **characterized in that** the rolling mean (27) includes a bush mean (28) interposed between the rolling mean (27) and the axial support (24).

16. Device according to claim 15 **characterized in that** the bush mean (28) is made of hardened steel.

17. Device according to claim 15 **characterized in that** the bush mean (28) is removably fixed to the rolling mean (27) and to the axial support (24).

18. Device according to claim 15 **characterized in that** the bush mean (28) has a surface contacting the axial support (24) larger than the inner cylindrical surface of the rolling mean (27), preferably the double.

19. Device according to claim 15 **characterized in that** the free end of the seat (25), has blocking means (30) of the rolling mean (27) provided with gasket means (31) for the hydraulic seal with the seat (25), whose remaining end, has rotatably seal means (29) mating the bush (28).

20. Device according to claim 19 **characterized in that** the blocking means (30) are disk shaped and removably fixed to the seat (25) by means of an elastic ring.

21. Device according to any of the preceding claims **characterized in that** the connection means (3) are positioned along a spiral of the axial support (2).
